# EUROPEAN PATENT APPLICATION

(11) **EP 4 239 474 A1**
(43) Date of publication of application: **06.09.2023**
(21) Application number: 21896283.5
(22) Date of filing: 18.06.2021
(51) Int. Cl.: G06F 9/455

(54) **SERVERLESS CONTAINER STARTING METHOD AND RELATED DEVICE**

(30) Priority: 26.11.2020 CN 202011351195; 08.03.2021 CN 202110251883
(71) Applicant: Huawei Technologies Co., Ltd., Shenzhen, Guangdong 518129 (CN)
(72) Inventor: CHEN, Xiao, Shenzhen, Guangdong 518129 (CN); WANG, Qian, Shenzhen, Guangdong 518129 (CN); CAI, Haomin, Shenzhen, Guangdong 518129 (CN)
(74) Representative: Huawei European IPR
(86) International application number: PCT/CN2021/100872
(87) International publication number: WO 2022/110775

(57) **Abstract**

This application provides a method for starting a serverless container and a related device. The method includes: loading a code segment file of an application to create an application instance; and loading a snapshot file of the application, where the snapshot file includes a deserialized data segment of the application. The method can improve loading performance, and effectively reduce a starting time and a self-healing time of a serverless container.

## Description

### TECHNICAL FIELD

The present invention relates to the field of cloud computing technologies, and in particular, to a method for starting a serverless container and a related device.

### BACKGROUND

Currently, cloud computing is developing rapidly, and serverless computing (serverless computing) has become an inevitable trend of cloud computing. Serverless computing is used to break down an original application and provide fine-grained service scheduling. Resources are occupied to invoke a service only when a request is received. No resource is occupied when no request is received. Charging is performed based on a quantity of invoking times and duration. Compared with a conventional online service mode, serverless computing greatly reduces costs of use for a user, simplifies development because the user does not need to consider server configuration, and provides better scalability than a conventional online service.

Currently, serverless container starting mainly includes serverless container starting based on a process/thread, serverless container starting based on operating system virtualization, and serverless container starting based on hardware virtualization. However, a starting time and a self-healing time of any serverless container starting thereof are long, resulting in high starting time overheads. An excessively long starting time causes a huge waste, especially when a single application runs for only several seconds or hundreds of milliseconds.

Therefore, how to accelerate serverless container starting and reduce a starting time and a self-healing time of a serverless container are urgent problems to be resolved currently.

### SUMMARY

Embodiments of the present invention disclose a method for starting a serverless container and a related device, to improve loading performance, and effectively reduce a starting time and a self-healing time of a serverless container.

According to a first aspect, this application provides a method for starting a serverless container. The method includes: loading a code segment file of an application to create an application instance; and loading a snapshot file of the application, where the snapshot file includes a deserialized data segment of the application.

In the solution provided in this application, the code segment file and the snapshot file of the application are separately stored, the deserialized data segment of the application is stored in the snapshot file, and the code segment file and the snapshot file are separately loaded during loading. This can effectively improve loading performance, and reduce a starting time and a self-healing time of the serverless container.

With reference to the first aspect, in a possible implementation of the first aspect, the deserialized data segment of the application is mapped to a data area of the application instance.

In the solution provided in this application, the deserialized data segment of the application in the snapshot file is mapped to the data area of the application instance, so as to complete a data initialization process of the application instance, and ensure that the application instance can be normally and quickly started.

With reference to the first aspect, in a possible implementation of the first aspect, before the loading a code segment file of an application to create an application instance, the method further includes: receiving a source code file of the application; and compiling the source code file to obtain the code segment file and the snapshot file.

In the solution provided in this application, in a serverless container compilation phase, the data segment of the application is separated from other parts, and the code segment file and the snapshot file are separately generated. In this way, the code segment file and the snapshot file of the application can be separately loaded when the serverless container is run, thereby effectively improving the loading performance and shortening the starting time of the serverless container.

With reference to the first aspect, in a possible implementation of the first aspect, the source code file is compiled by using a compiler to generate the code segment file and an initialization data file; the code segment file and the initialization data file are preloaded, and the initialization data file is deserialized; and a snapshot operation is performed on memory of the application to obtain the snapshot file.

In the solution provided in this application, during compilation of the source code file by using the compiler, a deserialization operation is performed on the data segment of the application, and the snapshot operation is performed on the memory of the application in a trial running process of the application after compilation to obtain the snapshot file. In this way, the deserialization operation is not performed on the data segment of the application when the snapshot file is loaded in a serverless container running phase, thereby effectively improving the loading performance and efficiency, and shortening the starting time of the serverless container.

With reference to the first aspect, in a possible implementation of the first aspect, the deserialized data segment of the application is mapped to the data area of the application instance by using a copy-on-write technology.

In the solution provided in this application, the snapshot file of the application includes the deserialized data segment of the application, and a format of the deserialized data segment of the application is completely the same as a format of the data segment of the application in the memory. Therefore, when the snapshot file is loaded, the deserialization operation does not need to be performed on the data segment of the application and the data segment does not need to be copied to the data area of the application instance by bytes. Instead, the snapshot file may be directly mapped to the data area of the application instance through memory address mapping by using the copy-on-write technology.

According to a second aspect, this application provides a starting device, including: a loading unit, configured to load a code segment file of an application; and a creation unit, configured to create an application instance based on the code segment file of the application; where the loading unit is further configured to load a snapshot file of the application, where the snapshot file includes a deserialized data segment of the application.

With reference to the second aspect, in a possible implementation of the second aspect, the loading unit is specifically configured to: map the deserialized data segment of the application to a data area of the application instance.

With reference to the second aspect, in a possible implementation of the second aspect, the network device further includes a compilation unit, where the compilation unit is configured to receive a source code file of the application, and compile the source code file to obtain the code segment file and the snapshot file.

With reference to the second aspect, in a possible implementation of the second aspect, the compilation unit is specifically configured to: compile the source code file to generate the code segment file and an initialization data file; preload the code segment file and the initialization data file, and deserialize the initialization data; and perform a snapshot operation on memory of the application to obtain the snapshot file.

With reference to the second aspect, in a possible implementation of the second aspect, the loading unit is specifically configured to: map the deserialized data segment of the application to the data area of the application instance by using a copy-on-write technology.

According to a third aspect, this application provides a starting device. The starting device includes a processor and a memory. The processor and the memory are connected by an internal bus. The memory stores instructions. The processor invokes the instructions in the memory to perform the method for starting a serverless container according to any one of the first aspect and the implementations of the first aspect.

According to a fourth aspect, this application provides a computer storage medium. The computer storage medium stores a computer program. When the computer program is executed by a processor, a procedure of the method for starting a serverless container according to any one of the first aspect and the implementations of the first aspect may be implemented.

According to a fifth aspect, this application provides a computer program product. The computer program includes instructions. When the computer program is executed by a computer, the computer may perform a procedure of the method for starting a serverless container according to any one of the first aspect and the implementations of the first aspect.

### BRIEF DESCRIPTION OF DRAWINGS

To describe technical solutions in embodiments of the present invention more clearly, the following briefly describes the accompanying drawings for describing the embodiments. It is clear that the accompanying drawings in the following description show some embodiments of the present invention, and a person of ordinary skilled in the art may still derive other drawings from these accompanying drawings without creative efforts.
FIG. 1 is a schematic diagram of a system architecture according to an embodiment of this application;
FIG. 2 is a schematic flowchart of a serverless container compilation method according to an embodiment of this application;
FIG. 3 is a schematic diagram showing comparison of snapshot formats according to an embodiment of this application;
FIG. 4 is a schematic diagram of a snapshot generation procedure according to an embodiment of this application;
FIG. 5 is a schematic flowchart of a serverless container running method according to an embodiment of this application;
FIG. 6 is a schematic diagram showing comparison of serverless container running principles according to an embodiment of this application;
FIG. 7 is a schematic diagram of running logic of a serverless container according to an embodiment of this application;
FIG. 8 is a schematic diagram of a structure of a network device according to an embodiment of this application; and
FIG. 9 is a schematic diagram of a structure of another network device according to an embodiment of this application.

### DESCRIPTION OF EMBODIMENTS

The following clearly and completely describes technical solutions in embodiments of this application with reference to accompanying drawings. It is clear that the described embodiments are merely some but not all embodiments of this application.

Some terms and related technologies used in this application are first described with reference to the accompanying drawings, to help a person skilled in the art have a better understanding.

Serverless container computing is a cloud service that decouples computing from storage, executes code without managing resource allocation, is paid based on a quantity of resources actually used, and does not require prepayment for a dedicated server or capacity. Serverless container computing does not mean that no server needs to be used, but means that a new abstraction layer is built based on cloud infrastructure, only a precise quantity of computing resources required for completing tasks are used to execute code. When a predefined event that triggers the code occurs, a serverless container platform executes the tasks.

A snapshot (snapshot) is a technology that records a state of a system at a particular time point. The Storage Networking Industry Association (storage networking industry association, SNIA) defines a snapshot as a fully available copy of a specified data set. The copy includes an image of the corresponding data at a particular time point (a time point at which the copy starts). A snapshot can be a copy of the data represented by the snapshot.

An application corresponds to a thread, to be specific, an application is equivalent to a thread. Running of each application involves multiple different data areas, mainly including a block started by symbol (block started by symbol, BSS) segment, a code segment, a data segment, a heap, and a stack. The BSS segment is a memory area for storing an uninitialized global variable of a program. The BSS segment belongs to static memory allocation. The code segment is a memory area for storing program execution code, and is generally read-only. The data segment is a memory area for storing initialized global variables in a program, and also belongs to static memory allocation. The heap is configured to store a memory segment that is dynamically allocated during running of the program. The stack is configured to store a local variable, pass a parameter, and return a value.

Application compilation refers to a process of using a compilation program to generate a target program from a source program written in a source language, and is generally implemented by the compilation program. The compilation program is a program that translates a program design written in one language into a program written in another equivalent language. The compilation program divides a working process of translating a source program into a target program into five phases: lexical analysis, syntax analysis, semantic check, intermediate code generation, code optimization, and target code generation. Lexical analysis and syntax analysis are mainly performed, which are also referred to source program analysis. If a syntax error is detected during the analysis, a prompt message is displayed.

WebAssembly (WebAssembly, WASM) is a new format that is portable, small, and compatible with the World Wide Web (Web), and loads fast, and is a bytecode standard proposed to improve performance of performance-sensitive templates in web pages. A WebAssembly system interface (WebAssembly system interface, WASI) is a new application programming interface (application programming interface, API) system. The purpose of WASI is to design a set of engine-independent API standards oriented to non-web systems for WASM.

A container (container) is a virtualization technology in an operating system of a computer. This technology enables a process to run in an independent and isolated environment (including an independent file system, namespace, and resource view, and the like), thereby simplifying a software deployment procedure, enhancing software portability and security, and improving system resource utilization. The container technology is widely used in as-a-service scenarios in the cloud computing field.

At present, in various serverless application scenarios, such as a serverless application scenario based on a process/thread, a serverless application scenario based on operating system virtualization, and a serverless application scenario based on hardware virtualization, a long starting time and self-healing time of a serverless container are required. Even if the process/thread itself has characteristics such as lightweight, a starting time required in a serverless application scenario based on a process/thread is at least 10 milliseconds. Therefore, a problem such as a waste of costs may be caused. To shorten the starting time of the serverless container, the starting time of the serverless container may be reduced by checkpoint-based hot starting. To be specific, first, an empty container for which an environment has been deployed is run. When a function image needs to be run, the empty container is live copied in a checkpoint-based manner. Then, the function image is deployed in the copied container instance for running. This reduces the starting time of the container in serverless starting. In some special service scenarios, the starting time may even be shortened to 1 ms.

Although the starting time of the serverless container can be reduced through hot standby and checkpoint technologies, an average starting time needed is still about 10 milliseconds. Especially, when a running time of an application is less than 100 milliseconds, the starting time of the serverless container accounts for at least 15% of the entire service time. In other words, the serverless container starting process takes a considerable amount of time, causing a huge waste and an increase in costs.

Based on the foregoing descriptions, this application provides a method for starting a serverless container. A snapshot file is generated for a data segment file of an application in a compilation process of the application, and a code segment file and the snapshot file of the application are separately loaded when the application runs. This can improve loading performance, and effectively reduce a starting time and a self-healing time of the serverless container, thereby reducing time overheads and costs for starting the serverless container.

In an implementation, technical solutions in embodiments of this application may be applied to any serverless cloud platform, for example, a public cloud serverless platform, a private cloud serverless platform, or a hybrid cloud serverless platform. Specifically, in a scenario in which an application is run on a public cloud serverless platform, when a cloud server executes the application, the cloud server may load the application by using the method for starting a serverless container according to embodiments of this application, to improve loading performance, and shorten a starting time and a self-healing time of the serverless container.

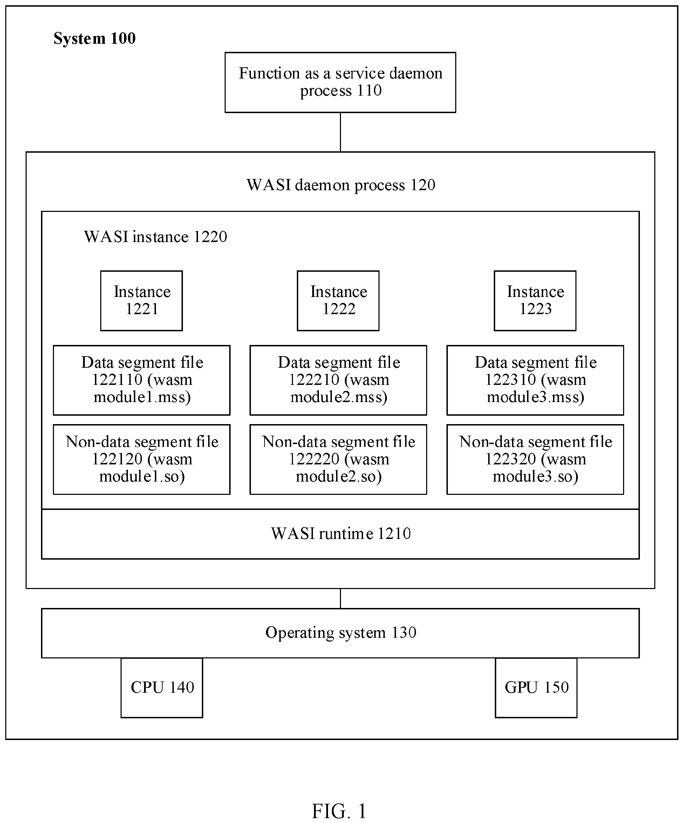

FIG. 1 is a schematic diagram of a system architecture according to an embodiment of this application. As shown in FIG. 1, the system 100 includes: a function as a service (function as a service, FaaS) daemon process 110, a WASI daemon process 120, an operating system 130, a central processing unit (central processing unit, CPU) 140, and a graphics processing unit (graphics processing unit, GPU) 150. The FaaS daemon process 110 and the WASI daemon process 120 are connected with each other. The WASI daemon process 120 is responsible for life cycle management of an instance, and specifically includes a WASI runtime 1210 and a WASI instance 1220. The WASI runtime 1210 is responsible for snapshot management and startup of each instance. The WASI instance 1220 includes instances such as an instance 1221, an instance 1222, and an instance 1223. Each instance has a corresponding instance file. The instance file mainly includes two parts, namely, a data segment file and a non-data segment file of the instance. The non-data segment file of the instance mainly includes a code segment file, a stack value, and other parts. For example, the instance file corresponding to the instance 1221 includes a data segment file 122110 and a non-data segment file 122120. The data segment file 122110 mainly includes heap memory of the instance 1221. A suffix of a file name of the data segment file 122110 is represented by .mss, and a suffix of a file name of the non-data segment file 122120 is represented by .so. It should be understood that each instance represents an application, may be in a form of a virtual device such as a container, and may be flexibly created and deleted. The CPU 140 and the GPU 150 deliver a service to the WASI daemon process 120 through the operating system 130. The WASI daemon process 120 performs snapshot management and startup on each instance in the WASI instance 1220 by using the WASI runtime 1210, so that when executing the delivered service, each instance in the WASI instance 1220 can be quickly started and serve upper-layer applications.

It may be learned that in the system architecture shown in FIG. 1, the data segment file and the non-data segment file of each instance are separately stored. In a process of loading an instance, a snapshot file (that is, the data segment file) and the non-data segment file of the instance are separately loaded. In this way, a deserialization operation of the data segment file does not need to be performed during loading the instance, thereby effectively improving loading performance and shortening a starting time of the instance.

With reference to the schematic diagram of the system architecture shown in FIG. 1, the following describes a method for starting a serverless container according to an embodiment of this application. The method mainly includes a serverless container compilation phase and serverless container running phase. A snapshot file of an application is generated in serverless container compilation phase, and the snapshot file of the application is directly loaded in the serverless container running phase, to achieve quick starting of the container.

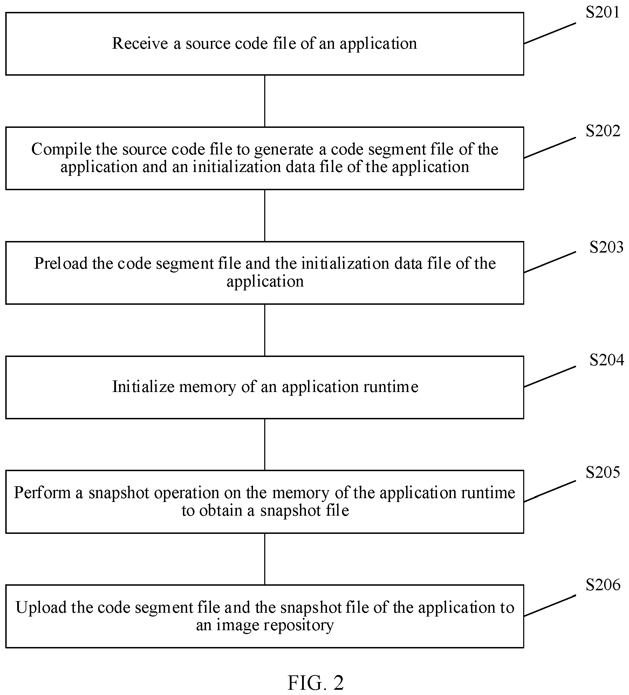

The following first describes the serverless container compilation phase. As shown in FIG. 2, a procedure of the serverless container compilation phase includes the following steps.

S201: Receive a source code file of an application.

Specifically, an application developer develops the source code file of the application, for example, a source code file in C language, C++ language, rust language, or the like.

S202: Compile the source code file to generate a code segment file of the application and an initialization data file of the application.

Specifically, after the source code file of the application is received, the source code file is compiled by using the compiler. When compiling a source code file, a conventional compiler generates only one file, for example, a dynamic link library.so, in which a data segment and a code segment of the application are coupled together. When compiling the source code file, the compiler in embodiments of this application separates the data segment file of the application, generates an independent initialization data file for the data segment file, and then generates a code segment file for another part of the application.

Further, the application includes a plurality of parts, for example, a heap memory page, a code segment, a stack value, and a BSS segment. During compilation by the compiler, the initialization data file is generated for the heap memory page of the application, and the code segment file is generated for another part of the application.

It should be noted that, when the compiler obtains the initialization data file by compilation, the initialization data file is serialized. In essence, serialization is a process of converting a data structure or object in an application into binary data and storing the binary data.

S203: Preload the code segment file and the initialization data file of the application.

Specifically, after the compiler completes compilation of the source code file, a development post-processing system loads the code segment file of the application and the initialization data file of the application, so as to prepare for an initialization operation on the application.

S204: Initialize memory of an application runtime.

Specifically, after loading the code segment file and the initialization data file of the application, a development post-processing system deserializes the serialized initialization data file obtained in step S202, to be specific, converts the generated binary data into a data structure or object of the application. Then, the development post-processing system performs initialization processing on the memory of the application runtime (for example, the WASI runtime 1210 described above), so that the memory of the application runtime may be dynamically allocated.

S205: Perform a snapshot operation on the memory of the application runtime to obtain a snapshot file.

Specifically, the development post-processing system obtains a memory snapshot of the application runtime, and then persistently stores the memory snapshot as the snapshot file. To be specific, the snapshot file mainly includes a deserialized heap memory page of the application.

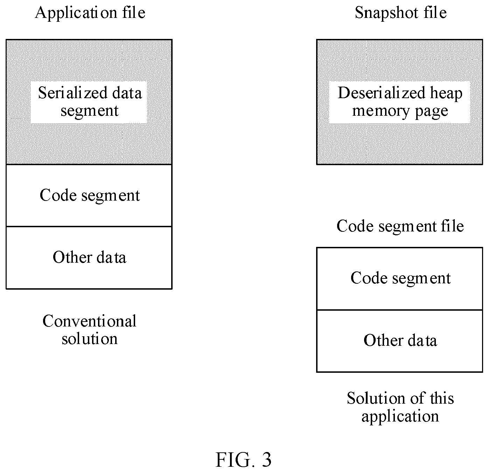

For example, FIG. 3 is a schematic diagram showing comparison of snapshot formats according to an embodiment of this application. As shown in FIG. 3, in a conventional solution, in a snapshot file generated after a compiler compiles a source code file of an application, a serialized data segment, a code segment, and other data of the application are coupled together. Each application corresponds to one file. In this embodiment of this application, a snapshot file of an application and a code segment file of the application are separated. The snapshot file of the application includes only a deserialized heap memory page. The code segment file of the application includes a code segment of the application and other data. Each application corresponds to two files.

S206: Upload the code segment file and the snapshot file of the application to an image repository.

Specifically, for each application, the development post-processing system uploads, to the image repository, the code segment file obtained through compilation and the snapshot file obtained through the deserialization operation by the compiler, so that when the serverless container runs, the code segment file and the snapshot file of the application may be directly loaded from the image repository, thereby achieving quick starting of the serverless container.

It can be learned that, in the serverless container compilation phase, the initialization data file of the application is stored independently of the code segment file, and the development post-processing system preloads and deserializes the initialization data file, to construct an initial memory snapshot of the application runtime, to obtain the snapshot file. This can reduce a file size after compilation of the application, avoid deserialization of the initialization data when the serverless container is loaded and run, thereby improving loading performance and reducing a starting time.

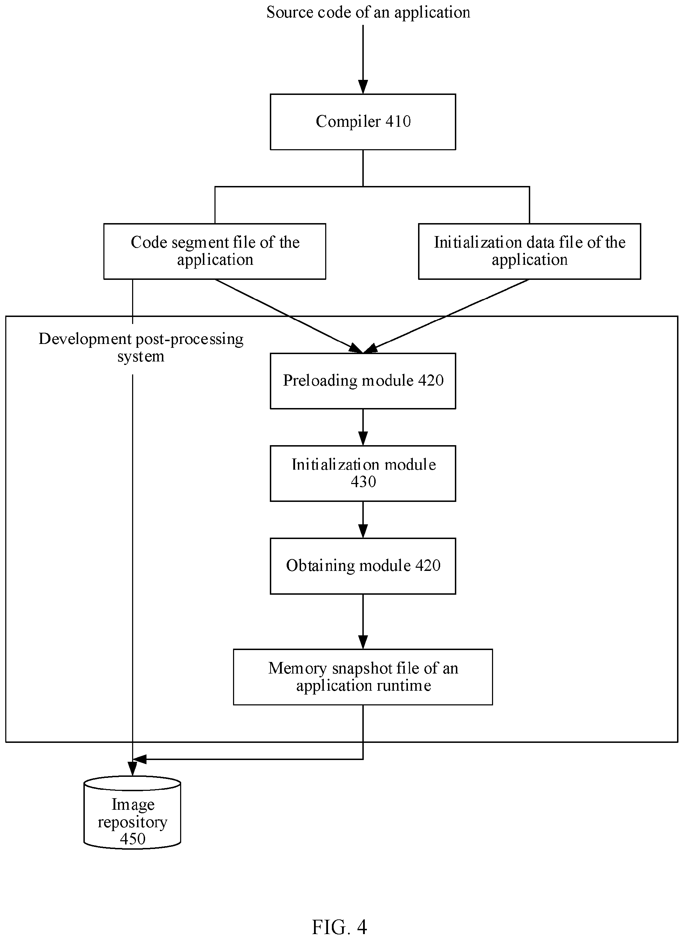

To better describe compilation logic of a serverless container, as shown in FIG. 4, after developing source code of an application, a developer sends the source code of the application to a compiler 410 for compilation. The compiler compiles the application source code to generate a code segment file of the application and an initialization data file of the application. Afterward, a preloading module 420 in the development post-processing system preloads the code segment file and the initialization data file of the application. Then, an initialization module 430 performs a deserialization operation on the initialization data file of the application and performs initialization processing on the memory of the application runtime. A snapshot obtaining module 440 obtains a memory snapshot of the application runtime and persistently stores the memory snapshot as a snapshot file. Finally, the obtained snapshot file and the code segment file of the application are uploaded together to an image repository 450, so that subsequently the code segment file and the snapshot file of the application may be directly loaded from the image repository 450.

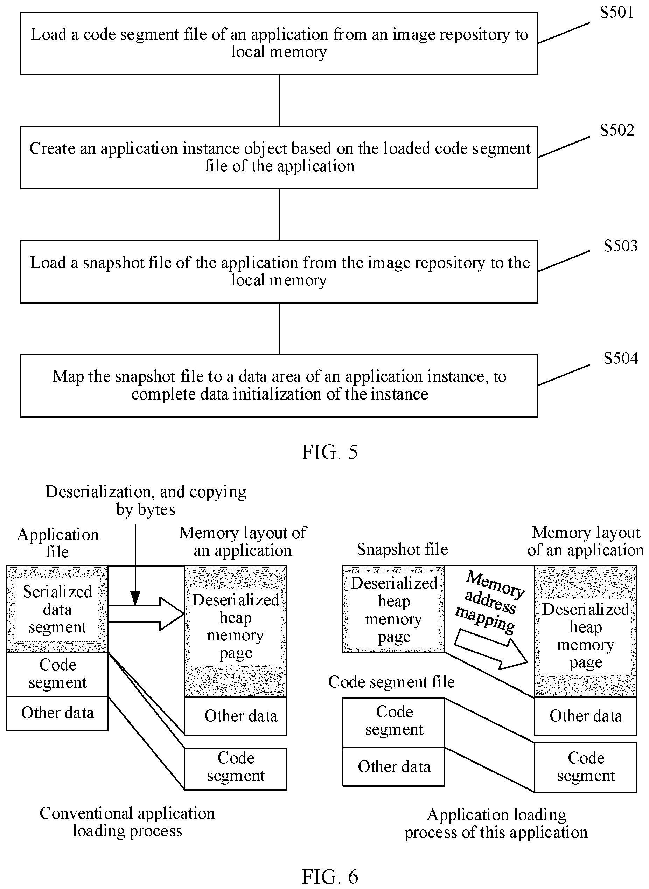

After the compilation of the serverless container is completed, the serverless container running phase is further described. As shown in FIG. 5, a process of the serverless container running phase includes the following steps.

S501: Load the code segment file of the application from the image repository to local memory.

Specifically, in response to an invocation by the service function, the application runtime downloads the code segment file of the application corresponding to the service function from the image repository through an application loader, and then loads the code segment file to the local memory.

S502: Create an application instance object based on the loaded code segment file of the application.

Specifically, the application runtime creates an application instance, for example, a container, based on code in the code segment file of the application.

S503: Load the snapshot file of the application from the image repository to the local memory.

Specifically, the application runtime downloads the snapshot file of the application corresponding to the service function from the image repository through the application loader, and then loads the snapshot file to the local memory.

S504: Map the snapshot file to a data area of the application instance, to complete data initialization of the instance.

Specifically, the application runtime maps the snapshot file to the data area of the application instance by using a copy-on-write technology, so as to complete the data initialization of the application instance.

It should be noted that, in the serverless container compilation phase, the code segment file and the snapshot file of the application are separately stored, and a format of the snapshot file of the application is completely the same as a format of the data segment of the application in memory. Therefore, in a process of data initialization of the application instance, a deserialization operation does not need to be performed, and the data segment does not need to be copied to the data area of the application instance by bytes. Instead, the process of data initialization of the application instance may be implemented through memory address mapping. It is easy to understand that, when a plurality of instances are created for a same application on a large scale, this can greatly improve performance of data initialization of the instance, improve processing efficiency of the application runtime, and reduce costs, compared with data initialization of an instance implemented by copying by bytes.

For example, FIG. 6 is a schematic diagram showing comparison of serverless container running principles according to an embodiment of this application. As shown in FIG. 6, in a conventional solution, a data segment, a code segment, and other data of an application are coupled in a file. When the file is loaded, the serialized data segment in the file needs to be deserialized, and then copied to a data area of an application instance by bytes. In embodiments of this application, a code segment file and a snapshot file of an application are separately stored, and a deserialized heap memory page is stored in the snapshot file, a format of the snapshot file is the same as a format of the data segment of the application in memory. Therefore, during loading, the snapshot file may be directly loaded to a data area of an application instance through memory address mapping, to complete data initialization of the application instance.

It can be learned that in the serverless container running phase, the code segment file of the application is directly loaded from the image repository to create the application instance, and the snapshot file is directly mapped to the data area of the application instance through memory address mapping, to complete the process of data initialization of the application instance. This can effectively improve starting performance of the serverless container, greatly reduce a starting time and a self-healing time of the serverless container, and avoid impact of a snapshot on a service.

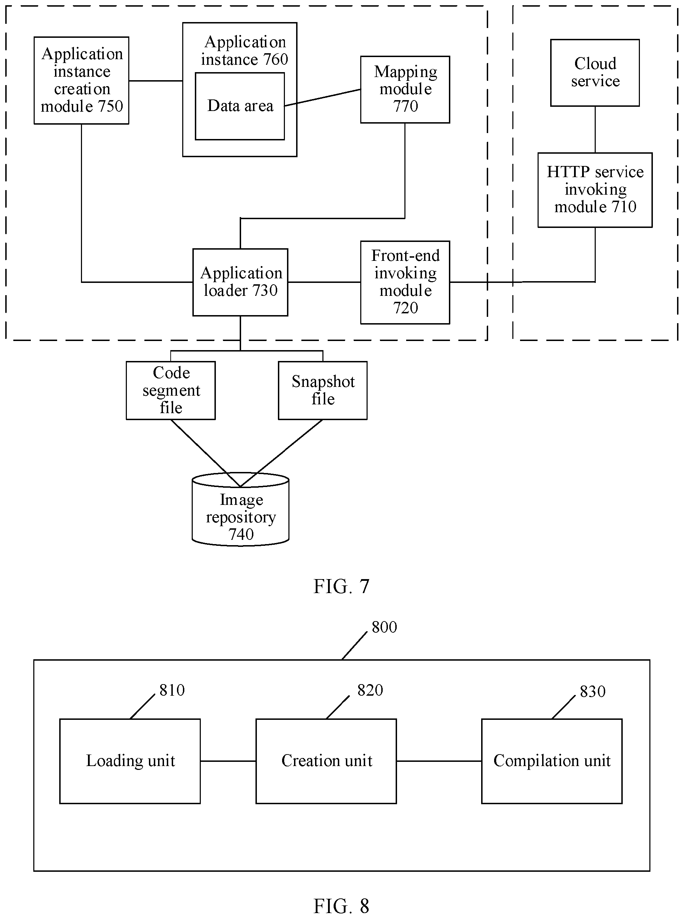

To better describe running logic of a serverless container, as shown in FIG. 7, a hypertext transfer protocol (Hypertext transfer protocol, HTTP) service invoking module 710 receives an HTTP request sent by a cloud service, and then transfers the request to a front-end invoking module 720. The front-end invoking module 720 invokes an application loader 730, so that the application loader 730 loads, from an application image repository 740, a code segment file and a snapshot file of an application corresponding to the HTTP request. Then, the application instance creation module 750 creates an application instance 760 based on the code segment file of the application, and a mapping module 770 maps the snapshot file to a data area of the application instance 760, to implement data initialization of the application instance 760.

The methods in embodiments of this application are described in detail above. For ease of better implementing solutions in embodiments of this application, correspondingly, a related device used to implement the solutions are further provided below.

FIG. 8 is a schematic diagram of a structure of a starting device according to an embodiment of this application. The starting device may be an execution entity in the method embodiments in FIG. 2 and FIG. 5, and may perform the methods and steps in the embodiment of the serverless container compilation method in FIG. 2 and the embodiment of the serverless container running method in FIG. 5. As shown in FIG. 8, a starting device 800 includes a loading unit 810, a creation unit 820, and a compilation unit 830.

The loading unit 810 is configured to load a code segment file of an application.

The creation unit 820 is configured to create an application instance based on the code segment file of the application.

The loading unit 810 is further configured to load a snapshot file of the application, where the snapshot file includes a deserialized data segment of the application.

It should be understood that the units included in the starting device may be software units, or may be hardware units, or some units are software units and some units are hardware units. The units may perform data transmission with each other via a communication channel.

In an embodiment, the loading unit 810 is specifically configured to: map the deserialized data segment of the application to a data area of the application instance.

In an embodiment, the compilation unit 830 is configured to receive a source code file of the application, and compile the source code file to obtain the code segment file and the snapshot file.

In an embodiment, the compilation unit 830 is specifically configured to: compile the source code file to generate the code segment file and an initialization data file; preload the code segment file and the initialization data file, and deserialize the initialization data; and perform a snapshot operation on memory of the application to obtain the snapshot file.

In an embodiment, the loading unit 810 is specifically configured to: map the deserialized data segment of the application to the data area of the application instance by using a copy-on-write technology.

It should be understood that the foregoing structure of the starting device is merely an example, and should not constitute a specific limitation. Units of the starting device may be added, deleted, or combined based on a requirement. In addition, operations and/or functions of the units in the starting device are respectively for implementing corresponding procedures of the methods described in FIG. 2 and FIG. 5. For brevity, details are not described herein again.

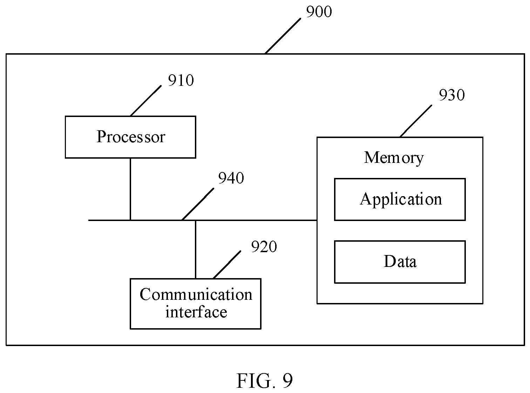

FIG. 9 is a schematic diagram of a structure of a starting device according to an embodiment of this application. The starting device may be an execution entity in the method embodiments in FIG. 2 and FIG. 5, and may perform the serverless container compilation method in FIG. 2 and the serverless container running method and steps in FIG. 5. As shown in FIG. 9, the starting device 900 includes: a processor 910, a communication interface 920, and a memory 930. The processor 910, the communication interface 920, and the memory 930 are connected to each other by an internal bus 940.

The starting device 900 may be an engine system in FIG. 1. A function executed by the system in FIG. 1 is actually executed by the processor 910 of the starting device.

The processor 910 may include one or more general-purpose processors, such as a CPU or a combination of a CPU and a hardware chip. The hardware chip may be an ASIC, a PLD, or a combination thereof. The PLD may be a CPLD, an FPGA, a GAL, or any combination thereof.

The bus 940 may be a PCI bus, an EISA bus, or the like. The bus 940 may include an address bus, a data bus, a control bus, or the like. For ease of representation, only one bold line is used to represent the bus in FIG. 9, but this does not mean that there is only one bus or only one type of bus.

The memory 930 may include a volatile memory (volatile memory), for example, a RAM; the memory 930 may include a non-volatile memory (non-volatile memory), for example, an ROM, a flash memory (flash memory), an HDD, or an SSD; or the memory 930 may include a combination of the foregoing types. Program code may be configured to implement a function unit shown in the starting device 800, or configured to implement method steps performed by the starting device in the method embodiment shown in FIG. 2 and the method embodiment shown in FIG. 5.

An embodiment of this application further provides a computer-readable storage medium. The computer-readable storage medium stores a computer program. When the program is executed by a processor, some or all of the steps described in any one of the foregoing method embodiments may be implemented, and a function of any functional unit described in FIG. 8 may be implemented.

An embodiment of this application further provides a computer program product. When the computer program product runs on a computer or a processor, the computer or the processor is enabled to perform one or more steps in any one of the foregoing methods. When constituent units of the foregoing device are implemented in a form of a software functional unit and sold or used as an independent product, the constituent units may be stored in the computer-readable storage medium.

In the foregoing embodiments, descriptions of all embodiments have respective focuses. For a part that is not described in detail in an embodiment, refer to related descriptions in other embodiments.

It should be further understood that sequence numbers of the foregoing processes do not mean execution sequences in various embodiments of this application. The execution sequences of the processes should be determined based on functions and internal logic of the processes, and should not be construed as any limitation on implementation processes of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

When the functions are implemented in a form of a software functional unit and sold or used as an independent product, the functions may be stored in a computer-readable storage medium. Based on such an understanding, the technical solutions of this application substantially, or a part contributing to conventional technologies, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

In conclusion, the foregoing embodiments are merely intended for describing the technical solutions of this application, but not for limiting this application. Although this application is described in detail with reference to the foregoing embodiments, a person of ordinary skilled in the art should understand that modifications may still be made to the technical solutions described in the foregoing embodiments or equivalent replacements may be made to some technical features, and such modifications or replacements do not cause the essence of the corresponding technical solutions to depart from the scope of embodiments of this application.

## Claims

1. A method for starting a serverless container, comprising:
loading a code segment file of an application to create an application instance; and
loading a snapshot file of the application, wherein the snapshot file comprises a deserialized data segment of the application.

2. The method according to claim 1, wherein the loading a snapshot file of the application specifically comprises:
mapping the deserialized data segment of the application to a data area of the application instance.

3. The method according to claim 1 or 2, wherein before the loading a code segment file of an application to create an application instance, the method further comprises:
receiving a source code file of the application; and
compiling the source code file to obtain the code segment file and the snapshot file.

4. The method according to claim 3, wherein the compiling the source code file to obtain the code segment file and the snapshot file comprises:
compiling the source code file by using a compiler to generate the code segment file and an initialization data file;
preloading the code segment file and the initialization data file, and deserializing the initialization data file; and
performing a snapshot operation on memory of the application to obtain the snapshot file.

5. The method according to any one of claims 2 to 4, wherein the mapping the deserialized data segment of the application to a data area of the application instance comprises:
mapping the deserialized data segment of the application to the data area of the application instance by using a copy-on-write technology.

6. A starting device, comprising:
a loading unit, configured to load a code segment file of an application; and
a creation unit, configured to create an application instance based on the code segment file of the application, wherein
the loading unit is further configured to load a snapshot file of the application, wherein the snapshot file comprises a deserialized data segment of the application.

7. The starting device according to claim 6, wherein the loading unit is specifically configured to:
map the deserialized data segment of the application to a data area of the application instance.

8. The starting device according to claim 6 or 7, wherein the starting device further comprises a compilation unit, wherein
the compilation unit is configured to receive a source code file of the application, and compile the source code file to obtain the code segment file and the snapshot file.

9. The starting device according to claim 8, wherein the compilation unit is specifically configured to:
compile the source code file to generate the code segment file and an initialization data file;
preload the code segment file and the initialization data file, and deserialize the initialization data; and
perform a snapshot operation on memory of the application to obtain the snapshot file.

10. The starting device according to any one of claims 7 to 9, wherein the loading unit is specifically configured to:
map the deserialized data segment of the application to the data area of the application instance by using a copy-on-write technology.

11. A starting device, wherein the starting device comprises a memory and a processor, and the processor executes computer instructions stored in the memory, so that the computing device performs the method according to any one of claims 1 to 5.

12. A computer-readable storage medium, wherein the computer-readable storage medium stores a computer program, and when the computer program is executed by a processor, a function of the method according to any one of claims 1 to 5 is implemented.
